# EUROPEAN PATENT APPLICATION

(11) **EP 2 015 386 A2**
(43) Date of publication of application: **14.01.2009**
(21) Application number: 08157451.9
(22) Date of filing: 03.06.2008
(51) Int. Cl.: H01M 10/04, H01M 2/02

(54) **Battery pack**

(30) Priority: 05.06.2007 KR 20070055184
(71) Applicant: Samsung SDI Co., Ltd., Suwon-si Gyeonggi-do (KR)
(72) Inventor: Baek, Woon-Seong, c/o Samsung SDI Co., Ltd., Suwon-si, Gyeonggi-do (KR); Kim, Heong-Sin, c/o Samsung SDI Co., Ltd., Suwon-si, Gyeonggi-do (KR)
(74) Representative: Hengelhaupt, Jürgen

(57) **Abstract**

A battery pack including: a bare cell, a case to house the bare cell, having at least one hole formed therein; a protection circuit board connected to bare cell; an adhesive applied onto the case, and to the bare cell via the hole, and a label attached to the bare cell and the case, by the adhesive.

## Description

### BACKGROUND OF THE INVENTION

### 1. Field of the Invention

Aspects of the present invention relate to a battery pack having a reduced thickness, due to a hole formed in a metal case surrounding a bare cell.

### 2. Description of the Related Art

Consumer demand for small, lightweight, multi-functional devices is constantly increasing, and thus, portable electronic devices, such as, PDAs, mobile phones, and camcorders employ high-energy density, rechargeable, secondary batteries as a main source of power. The characteristics of a secondary battery affect the power supply time, size, and weight of portable electronic devices. Thus, secondary batteries are being made more compact, lightweight, and longer lasting, and generally have a protection circuit to extend life-span and prevent safety hazards.

Secondary batteries include nickel-zinc batteries, nickel-cadmium batteries, nickel-metal hydride batteries, and lithium secondary batteries. Lithium secondary batteries are widely used, due to having high operating voltages and high energy densities per unit weight. The lithium secondary batteries are generally in the form of a battery pack having a protection circuit and a bare cell. The bare cell generally includes an electrode assembly and an electrolyte, which are disposed in an aluminum can, which is sealed by a cap assembly. Lithium secondary batteries are classified into cylindrical, rectangular, and pouch-type batteries, according to the shape of the can. They are also classified into lithium ion batteries and lithium polymer batteries, according to the type of electrolyte used.

Battery packs, in which the bare cell and the protection circuit are coupled to each other, can be classified as hard pack batteries and inner pack batteries. Hard pack batteries include a housing made of plastic resin molded around an outer face of a bare cell, which has an exposed terminal (external terminal), to electrically connect to an external device. The inner pack batteries include a bare cell connected with a metal case, with the top and bottom of the bare cell being covered with injection-molded cases, and then wrapped with a label.

The inner-pack battery can be made relatively thin, and be designed for various applications, including use in slim mobile phones. Consequently, inner-pack batteries are rapidly becoming standard equipment for many devices.

A conventional battery pack includes a bare cell and a protection circuit board electrically connected with the bare cell, to prevent overcharging, overdischarging, and overcurrents. A double-sided tape is attached to an outer face of the bare cell. A stainless steel case, to protect an outer surface of the bare cell, is connected to the side of the bare cell, via the double-sided tape.

A gap between the bare cell and the protection circuit board is molded with resin, or injection-molded upper and lower caps are connected to the top and bottom of the bare cell, respectively. An adhesive is applied onto the case, and then a label is wrapped around the case, thus completing the battery pack.

Since the conventional battery pack includes the bare cell, the double-sided tape, the case, the adhesive and the label, its thickness is determined by these elements. However, while all of these elements contribute to the thickness of the battery pack, the double-sided tape and the adhesive do not contribute to the performance and efficiency of the battery, but rather, function only to attach the bare cell to the case, and the case to the label.

### SUMMARY OF THE INVENTION

Aspects of the present invention provide a battery pack formed by a simplified assembly process, and having a reduced thickness, due to the lack of a double-sided tape applied between a bare cell and a case.

According to an aspect of the present invention, a battery pack includes: a bare cell; a protection circuit board connected to the bare cell; a metallic case to house the bare cell, and having at least one hole; an adhesive applied onto the case; and a label disposed on the adhesive.

The battery pack may further comprise an upper cap disposed on a first end of the case, adjacent to the protection circuit board; and a lower cap disposed on a second end of the case.

The bare cell may be a can-type or a pouch-type bare cell.

The case may be made of stainless steel. The case may comprise first and second cases that are attached to one another or the case may be formed as a single body.

The case may have opposing large sides and opposing small sides and the hole is formed in one of the large sides. The hole may be circular, rectangular, or ovoid.

The adhesive may be applied to the bare cell, via the hole.

The upper cap may be an integrated, embedded, or cover-type upper case.

A method of making a battery pack may comprise:
housing a bare cell in a case;
applying an adhesive to the outer surface of the case, and to the bare cell via holes in the case; and
applying a label to the adhesive.

The housing of the bare cell in the case may comprise the step of inserting the bare cell in the case.

The case may comprise a first case part and a second case part; and the housing of the bare cell in the case comprises disposing the first and second case parts on opposing sides of the bare cell, and attaching the first case part to the second case part.

The hole may be formed in at least one face of the metal case, which has a larger surface area than other faces of the case.

The hole may be circular, rectangular, or ovoid.

Additional aspects and/or advantages of the invention will be set forth, in part in the description which follows, and in part, will be obvious from the description, or may be learned by practice of the invention.

### BRIEF DESCRIPTION OF THE DRAWINGS

These and/or other aspects and advantages of the invention will become apparent and more readily appreciated from the following description of the exemplary embodiments, taken in conjunction with the accompanying drawings, of which:
FIG. 1A is an exploded perspective view of a battery pack, according to an exemplary embodiment of the present invention;
FIG. 1B is an assembled perspective view of the battery pack of FIG. 1A;
FIG. 1C is a cross-sectional view taken along line A-A' of FIG. 1B;
FIGS. 2A to 2C illustrate cases having holes of various shapes, according to exemplary embodiments of the present invention;
FIG. 3 is a flowchart illustrating a method of manufacturing a battery pack having a case, according to a first exemplary embodiment of the present invention; and
FIG. 4 is a flowchart illustrating a method of manufacturing a battery pack having a case, according to a second exemplary embodiment of the present invention.

### DETAILED DESCRIPTION OF THE EXEMPLARY EMBODIMENTS

Reference will now be made in detail to the exemplary embodiments of the present invention, examples of which are illustrated in the accompanying drawings, wherein like reference numerals refer to the like elements throughout. The exemplary embodiments are described below, in order to explain the aspects of the present invention, by referring to the figures.

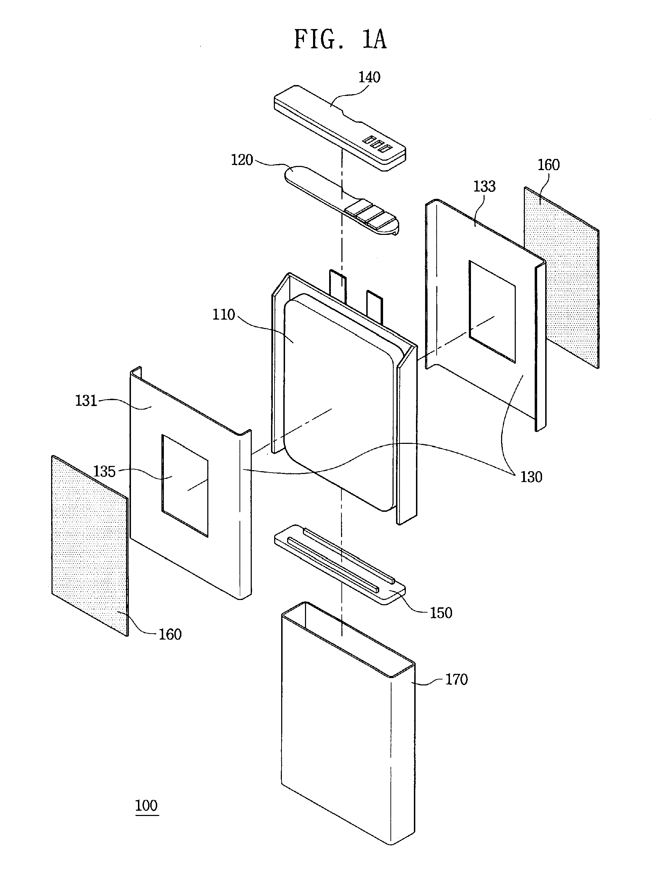

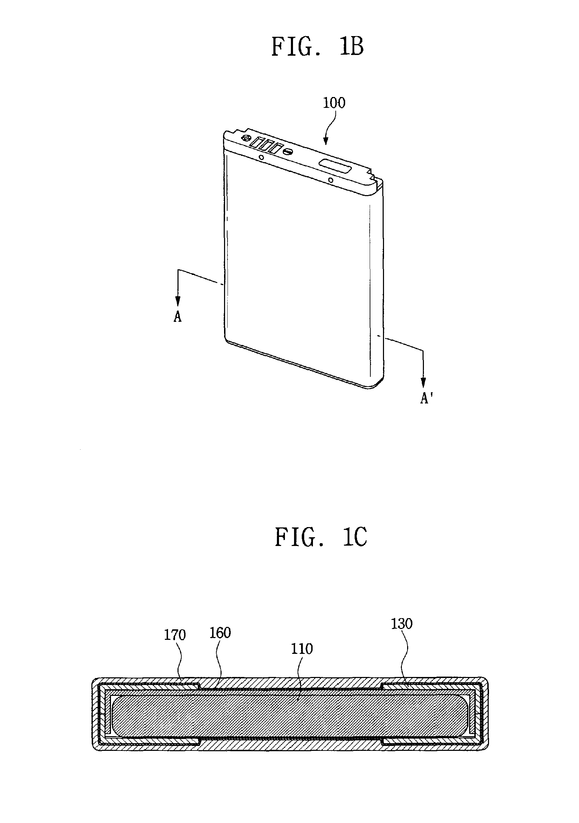

FIG. 1A is an exploded perspective view of a battery pack 100, according to an exemplary embodiment of the present invention, FIG. 1B is an assembled perspective view of the battery pack 100, and FIG. 1C is a cross-sectional view taken along line A-A' of FIG. 1B.

Referring to FIGS. 1A to 1C, the battery pack 100 includes: a bare cell 110; a protection circuit board 120 electrically connected to the bare cell 110, to prevent overcharges, overdischarges, and overcurrents; a case 130 to protect the bare cell 110; upper and lower caps 140, 150, to seal opposing ends of the case 130, an adhesive 160 disposed on the case 130; and a label 170 attached to the adhesive 160.

The bare cell 110 is a secondary battery, such as, a lithium secondary battery, a nickel-metal hydride battery, a nickel-cadmium battery, etc. Herein, the bare cell 110 is not limited to any particular type of secondary battery. The lithium secondary battery may be a lithium ion battery using a liquid electrolyte, or a lithium polymer battery using a solid polymer electrolyte or a gel electrolyte. The bare cell 110 may be a rectangular or cylindrical can-type bare cell 110, or may be a pouch-type bare cell 110.

The can-type bare cell 110 may include an electrode assembly (not shown) accommodated in a metal can, such as, an Al can formed by deep drawing. The top of the can is covered with a cap assembly (not shown), and then an electrolyte is injected therein.

The pouch-type bare cell 110 may include an electrode assembly (not shown) accommodated in a space in a bottom portion of a pouch-shaped casing. The pouched-shaped casing includes a top portion sealed to the bottom portion, such that the bare cell is hermetically sealed therein.

The protection circuit board 120 includes a printed circuit board (PCB) (not shown) having an interconnection pattern, and protection elements, such as, a protection circuit, a PTC, and/or a thermistor. The protection circuit board 120 may include an external connection terminal to connect the bare cell 110 with an external device. The protection circuit board 120 may be electrically connected with the bare cell 110, by a lead plate (not shown). The protection circuit board 120 may be directly connected with an electrode tab, which is connected with the electrode assembly.

The case 130 can be made of metal, such as, stainless steel or the like. The case 130 houses the bare cell 110, to protect the bare cell from external impacts. The case 130, as illustrated in FIG. 1A, may include a first case part 131 and a second case part 133, or may be formed as a single body. The first and second case parts 131 and 133 may be connected to the bare cell 110, and then fastened together, or may be first fastened together and then connected to the bare cell 110.

The case 130 has one or more holes 135 formed therein. The holes 135 are generally formed in larger sides of the case 130. The holes 135 can be formed during a process of molding the case 130, or may formed by cutting away portions of the case 130. The holes 135 may be formed in smaller sides of the case 130.

The adhesive 160 is applied to the larger surfaces of the case 130, and to the bare cell 110, through the holes 135. The adhesive 160 adheres the label 170 to the case 130, when the label 1709 is wrapped around the case 130, after application of the adhesive 160. The adhesive 160 also adheres the bare cell 110 to the label, via the holes 135. The holes 135 may be circular, rectangular, ovoid, or any other suitable shape.

After the bare cell 110 is connected with the protection circuit board 120, the upper cap 140 may be disposed over the protection circuit board 120, at an upper end of the case 130. The lower cap 150 may be disposed on an opposing lower end of the case 130. The upper and lower caps 140, 150 may be formed before the case 30 is formed. The upper cap 140 may be an integrated, embedded, or cover-type cap.

The integrated-type upper cap 140 may be formed by filling a gap, between the bare cell 110 and the connected protection circuit board 120, with a nylon-based synthetic resin, by injection-molding, at a low temperature and pressure. The embedded-type upper cap 140 may be formed by embedding the protection circuit board in a synthetic resin, and then connecting the same to the bare cell. The cover-type upper cap 140 may be pre-formed from a synthetic resin, and then attached to the upper end of the case 130 and the protection circuit board 120.

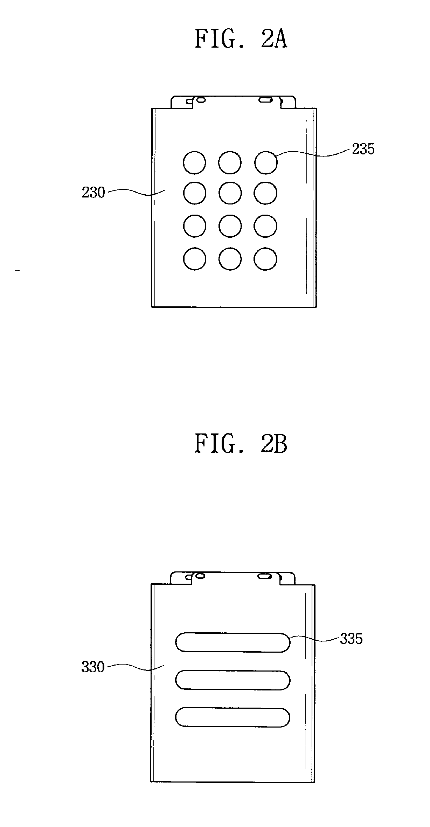

After the case 130 is connected to the bare cell 110, the adhesive 160 is applied to the outer surface of the case 130 and to the bare cell 110, via the holes 135 formed in the case 130. Then, the label 170 is attached to the case 130 and the bare cell 110 to form the battery pack 100, as illustrated in FIG. 2B. The label 170 is attached to the case 130, and to the bare cell 110 (through the holes 135), thereby increasing the adhesion between the bare cell 110 and the case 130. The adhesive 160 may be applied to the case 130, before the application of the label 170, or the adhesive 160 may be applied first to the label 170, before the label 170 is applied to the case 130.

Conventionally, in order to connect a bare cell with a case, a double-sided tape is included between the bare cell and the case. However, according to aspects of the present invention, the bare cell 110 and the case 130 may be connected to each other without the double-sided tape.

Referring to FIG. 1C, a cross-section taken along line A-A' of FIG. 1B, the battery pack 100 illustrates the bare cell 110, the case 130, the adhesive 160, and the label 170. As the battery pack 100 does not require two double-sided tapes to secure the bare cell 100 in the case 130, as is required in a conventional battery pack, the thickness of the battery pack 100 is thereby reduced. Also, since the battery pack 100 does not include the double-sided tapes, material costs are reduced, and the manufacturing thereof is simplified.

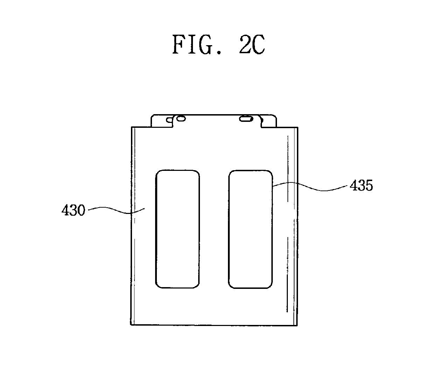

FIGS. 2A to 2C illustrate cases having holes of various shapes, according to exemplary embodiments of the present invention. In FIG. 2 a case 230 has an array of circular holes 235. In FIG. 2B, a case 330 has a plurality of elongated circular holes 335, which are elongated in a parallel direction to one another. In FIG. 2C a case 430 has a plurality of rectangular holes 435, which have rounded corners. The present invention is not limited to holes having the aforementioned shapes, as any suitable shape may be used, depending on the use of a case.

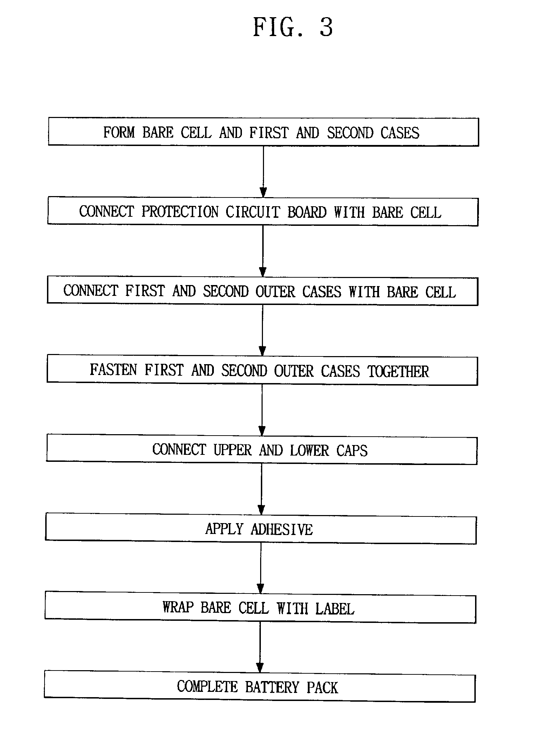

FIG. 3 is a flowchart illustrating a method of manufacturing a battery pack having a case, according to a first exemplary embodiment of the present invention. Referring to FIG. 3, a bare cell, and first and second metallic case parts, which are coupled with the bare cell and have at least one hole therein.

A protection circuit board is connected to the bare cell, and the first and second cases are connected with each other, around the bare cell. The first and second cases may be fastened together around the bare cell, and then the protection circuit board may be connected to the bare cell. Upper and lower caps may be connected to upper and lower ends of the cases.

An adhesive is applied to the first and second case parts, and to portions of the bare cell exposed by the holes in the first and second case parts. Finally, a label is wrapped around the first and second case parts, to complete the battery pack.

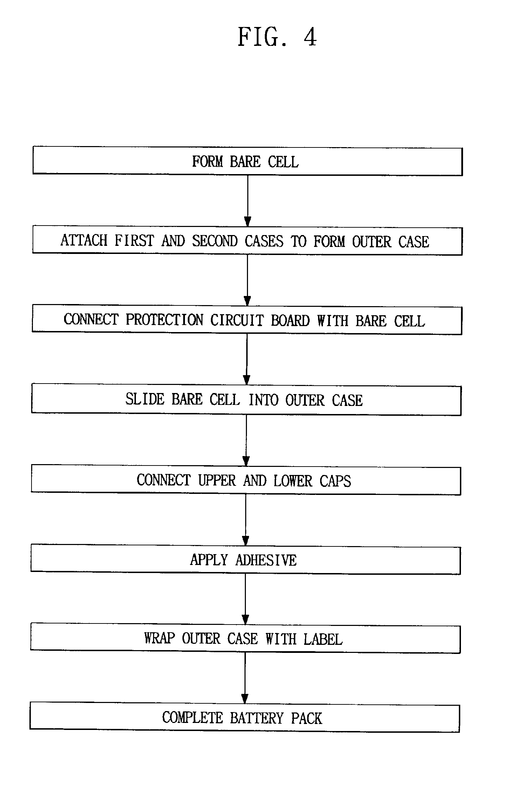

FIG. 4 is a flowchart illustrating a method of manufacturing a battery pack having a case, according to a second exemplary embodiment of the present invention. Referring to FIG. 4, a bare cell is formed, and first and second case parts made of metal, and having holes therein, are fastened together, to form a case.

The bare cell is connected with a protection circuit board, and slid into an opening of the case. Upper and lower caps are connected to upper and lower ends of the case.

An adhesive is applied to the outer surface of the case, and to portions of the bare cell that exposed through the holes in the case. Finally, a label is wrapped around the case, to complete the battery pack.

When the first and second case parts are fastened together before being connected with the bare cell, as in the second exemplary embodiment, damage to the bare cell occurring when the first and second case parts are fastened together, after being connected with the bare cell, as in the first exemplary embodiment, may be prevented, and the first and second case parts are easily fastened.

According to aspects of the present invention, holes are formed in a metal case disposed around a bare cell, thereby eliminating a double-sided tape attached to the bare cell and the case. This results in a simpler assembly process and a thinner battery pack.

## Claims

1. A battery pack (100) comprising:
a bare cell (110);
a protection circuit board (120) connected to the bare cell (110);
a metallic case (130) having at least one hole (135) to house the bare cell (110);
an adhesive (160) applied onto the case (130); and
a label (170) disposed on the adhesive (160).

2. The battery pack according to claim 1, further comprising:
an upper cap (140) disposed on a first end of the case (130), adjacent to the protection circuit board (120); and
a lower cap (150) disposed on a second end of the case (130).

3. The battery pack according to claim 1 or 2, wherein the bare cell (110) is a can-type or a pouch-type bare cell.

4. The battery pack according to any of the preceding claims, wherein the case (130) is made of stainless steel.

5. The battery pack according any of the preceding claims, wherein the case (130) comprises first and second case parts (131, 133) that are attached to one another.

6. The battery pack according to any of claims 1 through 4, wherein the case (130) is formed as a single body.

7. The battery pack according to any of the preceding claims, wherein the case (130) has opposing large sides and opposing small sides, and the hole (135) is formed in one of the large sides.

8. The battery pack according to claim 7, wherein the hole (135) is circular, rectangular, or ovoid.

9. The battery pack according to claim 2, wherein the upper cap (140) is an integrated, embedded, or cover-type upper case.

10. A method of making a battery pack (100), comprising:
housing a bare cell (110) in a case (130);
applying an adhesive (160) to the outer surface of the case (130) and to the bare cell (110) via holes (135) in the case (130); and
applying a label (170) to the adhesive (160).

11. The method of claim 10, wherein the housing of the bare cell (110) in the case (130) comprises inserting the bare cell (110) in the case (130).

12. The method of claim 10, wherein the case (130) comprises a first case part (131) and a second case part (133); and
the housing of the bare cell (110) in the case (130) comprises disposing the first and second case parts (131, 133) on opposing sides of the bare cell (110), and attaching the first case part to the second case part (131, 133).
